# EUROPÄISCHE PATENTANMELDUNG

(11) **EP 3 970 950 A1**
(43) Veröffentlichungstag der Anmeldung: **23.03.2022**
(21) Anmeldenummer: 20197331.0
(22) Anmeldetag: 22.09.2020
(51) Int. Cl.: B29C 64/112, B29C 64/118, B29C 64/194, B29C 64/209, B29C 64/241, B29C 64/245, B29C 64/393, B33Y 10/00, B33Y 30/00, B33Y 40/00, B33Y 50/02, B22F 10/00, B22F 12/00, B29C 64/232, B29C 64/236

(54) **ANORDNUNG ZUR ADDITIVEN FERTIGUNG EINES DREIDIMENSIONALEN DRUCKOBJEKTS**

(71) Anmelder: Siemens Aktiengesellschaft, 80333 München (DE)
(72) Erfinder: Jähnicke, Jens, 09112 Chemnitz (DE); Schneider, Heinz-Ingo, 85598 Baldham (DE)

(57) **Zusammenfassung**

Eine Anordnung (2) zur additiven Fertigung eines dreidimensionalen Druckobjekts (36) mit einer translatorisch in drei Achsen (X, Y, Z) verfahrbaren Druckanordnung (4). Um eine verbesserte Kostenposition zu errichen, wird vorgeschlagen, dass die Druckanordnung (4) zumindest eine Druckvorrichtung (6) sowie zumindest eine von der Druckvorrichtung (6) beabstandete Sensoranordnung (8, 8v, 8n) umfasst, wobei die zumindest eine Druckvorrichtung (6) konfiguriert ist, in einem ersten Feld (20) ein Druckmaterial (22) aufzutragen, wobei die zumindest eine Sensoranordnung (8, 8v, 8n) konfiguriert ist, insbesondere gleichzeitigen, in einem vom ersten Feld (22) verschiedenen zweiten Feld (24) zumindest eine physikalische Größe zu ermitteln.

## Beschreibung

Die Erfindung betrifft eine Anordnung zur additiven Fertigung eines dreidimensionalen Druckobjekts.

Ferner betrifft die Erfindung ein Verfahren zur additiven Fertigung eines dreidimensionalen Druckobjekts.

Darüber hinaus betrifft die Erfindung eine Steuereinheit mit Mitteln zur Durchführung eines derartigen Verfahrens.

Bei, insbesondere multiaxialen, additiven Fertigungsverfahren werden Prozessköpfe auf definierten Werkzeugbahnen bewegt, um Metall oder Kunststoffteile generativ aufzubauen. Ein derartiges additives Fertigungsverfahren wird auch 3D-Druck genannt. Bei der additiven Fertigung mit metallischen Werkstoffen kommt beispielsweise ein "Directed Energy Deposition" (DED) Verfahren, insbesondere "Laser-Pulver Auftragsschweißen" (LPA, auf Englisch "Laser Metal Deposition" (LMD)), Laser-Draht-Auftragsschweißen, "Wire Arc Additive Manufacturing" (WAAM) oder Auftragsschweißen mittels Elektronenstrahl, zum Einsatz. Bei der additiven Fertigung mit Kunststoffen, insbesondere Polymeren, kommt beispielsweise ein Extrusionsverfahren (auf Englisch "Material Extrusion" (ME)) zu Einsatz, das auch "Fused Deposition Modeling" (FDM) genannt wird. Bei derartigen additiven Fertigungsverfahren treten Qualitätsschwankungen, insbesondere bezüglich einer Lagendicke, auf, welche beispielsweise auf Variationen des Abstandes zwischen der Druckvorrichtung und einem zu druckenden dreidimensionalen Druckobjekt zurückzuführen sind.

Die Offenlegungsschrift EP 3 650 140 A1 beschreibt ein Verfahren zur additiven Fertigung eines Werkstücks mittels eines Bearbeitungskopfs. Bei dem Verfahren wird die Geschwindigkeit des Bearbeitungskopfs in Abhängigkeit von einer vorgegebenen und/oder erfassten Geometrie des Werkstücks eingestellt.

Vor diesem Hintergrund ist es Aufgabe der Erfindung, eine kostengünstige Anordnung zur additiven Fertigung eines dreidimensionalen Druckobjekts anzugeben.

Diese Aufgabe wird erfindungsgemäß gelöst durch eine Anordnung zur additiven Fertigung eines dreidimensionalen Druckobjekts mit einer translatorisch in drei Achsen verfahrbaren Druckanordnung, wobei die Druckanordnung zumindest eine Druckvorrichtung sowie zumindest eine von der Druckvorrichtung beabstandete Sensoranordnung umfasst, wobei die zumindest eine Druckvorrichtung konfiguriert ist, in einem ersten Feld ein Druckmaterial aufzutragen, wobei die zumindest eine Sensoranordnung konfiguriert ist, insbesondere gleichzeitigen, in einem vom ersten Feld verschiedenen zweiten Feld zumindest eine physikalische Größe zu ermitteln.

Ferner wird die Aufgabe erfindungsgemäß durch ein Verfahren zur additiven Fertigung eines dreidimensionalen Druckobjekts mit einer translatorisch in drei Achsen verfahrbaren Druckanordnung, wobei die Druckanordnung zumindest eine Druckvorrichtung sowie zumindest eine von der Druckvorrichtung beabstandete Sensoranordnung umfasst, wobei mit der zumindest einen Druckvorrichtung in einem ersten Feld ein Druckmaterial aufgetragen wird, wobei mit der zumindest einen Sensoranordnung, insbesondere gleichzeitig, in einem vom ersten Feld verschiedenen zweiten Feld zumindest eine physikalische Größe ermittelt wird.

Darüber hinaus wird die Aufgabe erfindungsgemäß durch eine Steuereinheit mit Mitteln zur Durchführung eines derartigen Verfahrens gelöst.

Die in Bezug auf die Anordnung nachstehend angeführten Vorteile und bevorzugten Ausgestaltungen lassen sich sinngemäß auf das Verfahren und die Steuereinheit übertragen.

Der Erfindung liegt die Überlegung zugrunde, die Kosten für eine Druckanordnung zur additiven Fertigung eines dreidimensionalen Druckobjekts zu reduzieren, indem die Druckanordnung, welche translatorisch in drei Achsen verfahrbar ist, neben der Druckvorrichtung zum Auftragen des Druckmaterials eine nicht-kohärente Sensoranordnung umfasst, welche von der Druckvorrichtung beabstandet angeordnet ist. Die Sensoranordnung weist mindestens einen Sensor, beispielsweise einen Temperatursensor, einen Abstandssensor oder einen Magnetfeldsensor auf. Mit Hilfe der Sensoranordnung wird zumindest eine physikalische Größe, beispielsweise eine Temperatur und/oder ein Abstand ermittelt, um Qualitätsschwankungen zu reduzieren und die Druckqualität zu optimieren.

Mit der zumindest einen Druckvorrichtung wird in einem ersten Feld ein Druckmaterial aufgetragen, wobei mit der zumindest einen Sensoranordnung, insbesondere gleichzeitig, in einem vom ersten Feld beabstandet angeordneten zweiten Feld die zumindest eine physikalische Größe ermittelt wird. Die Felder sind insbesondere auf einer zu druckenden Bahn angeordnet. Beispielsweise werden die Felder in einem CAD/CAM System generiert und sind einem Untergrund zugeordnet, wobei der Untergrund ein teilweise fertig gedrucktes dreidimensionale Druckobjekt oder eine Oberfläche, auf dem das dreidimensionale Druckobjekt gedruckt werden kann, ist. Ein Abstand zwischen der Druckvorrichtung und der Sensoranordnung liegt beispielsweise im Bereich von 10 mm und 100 mm. Durch einen derartigen Abstand zur Druckvorrichtung wird die Sensoranordnung signifikant geringer durch den Druckprozess, beispielweise durch umherfliegende Partikel, gestört, sodass kostengünstige Sensoren verwendbar sind. Kostengünstige Sensoren sind beispielsweise Triangulations-Systeme mit Messpunkt oder kurzen Laserlinien. Insbesondere bei einem additiven Fertigungsverfahren, bei dem ein metallischer Werkstoff als Druckmaterial verwendet wird, beispielsweise bei einem "Directed Energy Deposition" Verfahren, wird durch einen derartigen Abstand der Sensoranordnung zur Druckvorrichtung eine geringere Störanfälligkeit der Sensorik erreicht. Die Mittel zu Durchführung des Verfahrens der Steuereinheit umfassen beispielswiese einen digitalen Logikbaustein, insbesondere einen Mikroprozessor, einen Mikrocontroller, einen FPGA (field programmable gate array), einen ASIC (application-specific integrated circuit), der für den Betrieb der Anordnung konfiguriert ist.

Eine weitere Ausführungsform sieht vor, dass zumindest eine Sensoranordnung einen Abstandssensor zur Ermittlung einer Distanz zur Anordnung umfasst. Insbesondere wird eine Distanz der Druckvorrichtung zum dreidimensionalen Druckobjekt ermittelt. Der Abstandssensor kann induktiv, kapazitiv oder mechanisch taktil ausgeführt sein. Derartige Sensoren sind kostengünstig und leicht integrierbar.

Eine weitere Ausführungsform sieht vor, dass zumindest eine Sensoranordnung in einer Druckrichtung vorlaufend angeordnet ist. Durch eine in Druckrichtung vorlaufend angeordnete Sensoranordnung ist die physikalische Größe vor dem Druckvorgang ermittelbar.

Eine weitere Ausführungsform sieht vor, dass die vorlaufend angeordnete Sensoranordnung einer Regelungseinrichtung zugeordnet ist. Die Regelungseinrichtung ist beispielsweise konfiguriert eine Distanz der Druckvorrichtung von einem Untergrund zu regeln, wobei der Untergrund entweder ein teilweise fertig gedrucktes dreidimensionale Druckobjekt oder eine Oberfläche, auf dem das dreidimensionale Druckobjekt gedruckt werden kann, ist. Insbesondere wird die Distanz durch die Regelungseinrichtung über ein Stellglied geregelt. Durch eine derartige Regelungseinrichtung wird die Druckqualität verbessert.

Eine weitere Ausführungsform sieht vor, dass zumindest eine Sensoranordnung in einer Druckrichtung nachlaufend angeordnet ist. Durch eine in Druckrichtung nachlaufend angeordnete Sensoranordnung ist die physikalische Größe nach dem Druckvorgang ermittelbar, um beispielsweise eine Druckqualität zu ermitteln.

Eine weitere Ausführungsform sieht vor, dass die nachlaufend angeordnete Sensoranordnung einer Vorrichtung zum Monitoring zugeordnet ist. Die Vorrichtung zum Monitoring überwacht beispielsweise mindestens einen Druckparameter, insbesondere eine Auftragsstärke und/oder eine Temperatur des Druckmaterials, nach dem Druckvorgang. Insbesondere wird der mindestens eine ermittelte Druckparameter mit einem Sollwert verglichen. Durch eine derartige Vorrichtung zum Monitoring wird die Druckqualität verbessert.

Eine weitere Ausführungsform sieht vor, dass zumindest eine Sensoranordnung im Verhältnis zu zumindest einer Druckvorrichtung derartig drehbar angeordnet ist, dass die zumindest eine Druckvorrichtung und die zumindest eine Sensoranordnung auf einer zu druckenden gekrümmten Bahn jeweils zentriert angeordnet sind. Insbesondere wird während des Druckens auf der gekrümmten Bahn ein Drehwinkel durch Drehen der Sensoranordnung dynamisch justiert, sodass die Druckvorrichtung und die Sensoranordnung stets auf der zu druckenden gekrümmten Bahn stets zentriert angeordnet sind. Die drehbare Anordnung der Sensoranordnung im Verhältnis zur Druckvorrichtung wird beispielsweise dadurch realisiert, dass der gesamte Druckkopf drehbar um eine Rotationsachse ausgeführt ist. Alternativ ist beispielsweise die Sensoranordnung drehbar um die Druckvorrichtung ausgeführt oder ein Untergrund, auf welchem das zu druckende dreidimensionale Druckobjekt angeordnet ist, ist rotierbar ausgeführt. Beispielsweise wird die, insbesondere dynamische, Drehung der Sensoranordnung im Verhältnis zur Druckvorrichtung in einem CAD/CAM System generiert. Durch eine derartige Anordnung sind auch komplexe Druckobjekte schnell und kostengünstig realisierbar.

Eine weitere Ausführungsform sieht vor, dass die Anordnung ein Stützelement aufweist, auf welchem ein zu druckendes dreidimensionales Druckobjekt anordenbar ist, wobei das Stützelement zumindest rotatorisch um einen Azimutwinkel und/oder einen Elevationswinkel bewegbar ausgeführt ist. Das Stützelement ist ein, insbesondere im Wesentlichen ebenes, Element, das das zu druckende dreidimensionale Druckobjekt während des Druckvorgangs stützt. Beispielsweise umfasst das Stützelement eine Glasplatte, eine Polymerplatte oder eine Schaumstoffoberfläche. Insbesondere ist das Stützelement ein Teil eines Drucktisches, welcher über zumindest ein Stellglied, welches insbesondere einen Elektromotor umfasst, rotatorisch beweglich ist. Das dreidimensionale Druckobjekt wird beispielsweise adhäsiv auf der Druckplatte während des Druckvorgangs gehalten. Durch ein derartiges rotatorisch bewegliches Stützelement wird das Drucken von Überhängen ohne zusätzliche Stützstrukturen ermöglicht. Zusammen mit einer translatorisch in drei Achsen verfahrbaren Druckanordnung spricht man von einem Fünf-Achsen-Druck. Durch die rotatorischen Freiheitsgrade in Azimutrichtung und Elevationsrichtung wird das Drucken von komplexen Objekten schnell und kostengünstig ermöglicht.

Eine weitere Ausführungsform sieht vor, dass zumindest eine Sensoranordnung zwei verschiedenartige Sensoren aufweist, wobei die zwei verschiedenartigen Sensoren konfiguriert sind, insbesondere gleichzeitig, im zweiten Feld jeweils eine, insbesondere unterschiedliche, physikalische Größe zu ermitteln. Die verschiedenartigen Sensoren sind z.B. ein Temperatursensor und Abstandssensor, welche das gemeinsame zweite Feld nutzen. Die verschiedenartigen Sensoren können aber auch zwei redundante Abstandssensoren sein, welche ein unterschiedliches Messverfahren nutzen, z.B. ein induktiver und ein mechanisch taktiler Abstandssensor. Durch Redundanz werden eine höhere Genauigkeit und Zuverlässigkeit erreicht.

Im Folgenden wird die Erfindung anhand der in den Figuren dargestellten Ausführungsbeispiele näher beschrieben und erläutert.

### Es zeigen:

- FIG 1: eine schematische Schnittdarstellung einer ersten Ausgestaltung einer Anordnung zur additiven Fertigung mit einer Druckanordnung,
- FIG 2: eine schematische Schnittdarstellung einer zweiten Ausgestaltung einer Anordnung zur additiven Fertigung mit einer Druckanordnung,
- FIG 3: eine schematische Schnittdarstellung einer dritten Ausgestaltung einer Anordnung zur additiven Fertigung mit einer Druckanordnung,
- FIG 4: eine schematische Schnittdarstellung einer vierten Ausgestaltung einer Anordnung zur additiven Fertigung mit einer Druckanordnung,
- FIG 5: eine schematische Darstellung eines Verfahrens zum Drucken einer gekrümmten Bahn.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

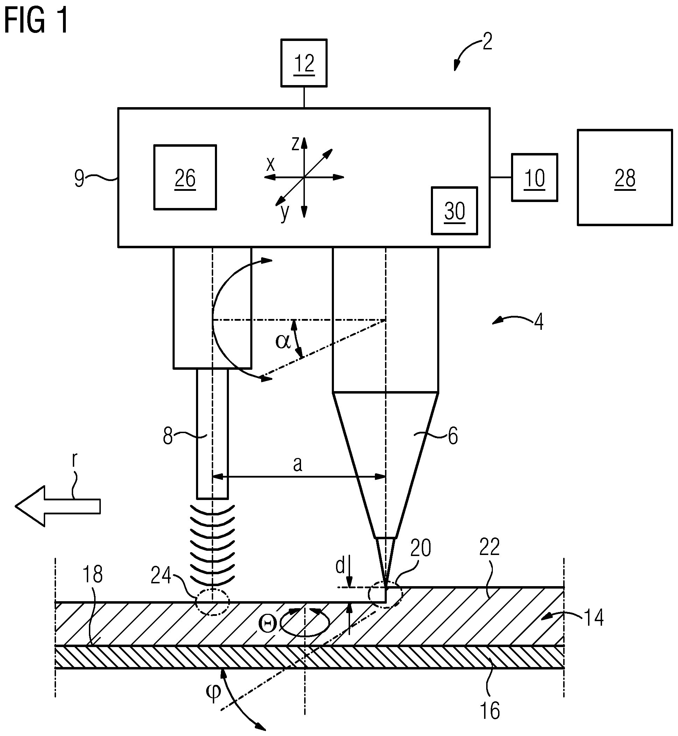

FIG 1 zeigt eine schematische Schnittdarstellung einer ersten Ausgestaltung einer Anordnung 2 zur additiven Fertigung mit einer Druckanordnung 4. Die Druckanordnung 4 umfasst eine Druckvorrichtung 6 sowie eine Sensoranordnung 8. Die Druckvorrichtung 6 und die Sensoranordnung 8, welche von der Druckvorrichtung 6 beabstandet ist, sind in einem gemeinsamen Druckkopf 9 aufgenommen. Ein Abstand a zwischen der Druckvorrichtung 6 und der Sensoranordnung 8 liegt beispielsweise im Bereich von 10 mm und 100 mm. Der Druckkopf 9 zusammen mit der Druckvorrichtung 6 und der Sensoranordnung 8 ist mit Hilfe von Stellgliedern 10, 12 translatorisch in drei Achsen X, Y, Z verfahrbar. Beispielsweise wird der Druckkopf 9 zusammen mit der Druckvorrichtung 6 und der Sensoranordnung 8 mittels eines X/Y-Stellgliedes 10, insbesondere gleichzeitig, entlang der X- und Y-Achse bewegt, während das Z-Stellglied 12 den Druckkopf 9 zusammen mit der Druckvorrichtung 6 und der Sensoranordnung 8 entlang der Z-Achse bewegt, um beispielsweise eine Distanz d der Druckvorrichtung 6 von einem Untergrund zu regulieren. Der Untergrund ist entweder ein teilweise fertig gedrucktes dreidimensionale Druckobjekt 14 oder ein Stützelement 16, welches eine Oberfläche 18 umfasst, auf dem das dreidimensionale Druckobjekt 14 gedruckt werden kann. Das Stützelement 16, welches beispielsweise Teil eines Drucktisches ist, ist rotatorisch um einen Azimutwinkel 9 und einen Elevationswinkel ϕ beweglich, um beispielsweise das Drucken von Überhängen ohne zusätzliche Stützstrukturen zu ermöglichen.

Die Druckvorrichtung 6 ist konfiguriert, in einem ersten Feld 20 ein Druckmaterial 22 aufzutragen, wobei aus dem Druckmaterial 22 das dreidimensionale Druckobjekt 14 additiven ausgebildet wird. Beispielhaft ist die Druckvorrichtung 6 zum Drucken mittels Auftragsschweißen, insbesondere Laser-Pulver-Auftragsschweißen oder Laser-Draht-Auftragsschweißen, ausgeführt, wobei als Druckmaterial 22 insbesondere ein metallischer Werkstoff zum Einsatz kommt. Alternativ ist die Druckvorrichtung 6 zum Drucken mittels Materialextrusion ausgeführt, wobei als Druckmaterial 22 beispielsweise Kunststoff oder Harz eingesetzt wird. Optional enthält der, insbesondere thermoplastische, Kunststoff eine Füllung aus Metall- oder Keramikpartikeln, wobei metall- oder keramikgefüllte Filamente nach dem Druckvorgang, beispielsweise durch einen Entbinderungs- und Sinterprozess, weiterverarbeitet werden. Zusätzliche Komponenten, wie beispielsweise ein Reservoir für das Druckmaterial 22 sind aus Gründen der Übersichtlichkeit in FIG 1 nicht dargestellt. Die Druckanordnung 4 kann mehrere, insbesondere in einer Druckrichtung r hintereinander angeordnete, Druckvorrichtungen 6 aufweisen.

Die Sensoranordnung 8 ist konfiguriert, insbesondere gleichzeitig mit dem Auftragen des Druckmaterials 22 durch die Druckvorrichtung 6, in einem vom ersten Feld 20 verschiedenen zweiten Feld 24 eine physikalische Größe zu ermitteln. Beispielhaft ist die Sensoranordnung 8 als ein Abstandssensor zur Ermittlung einer Distanz d zur Anordnung 2 ausgeführt ist. Der Abstandssensor kann induktiv, kapazitiv oder mechanisch taktil ausgeführt sein. Die Sensoranordnung 8 ist in FIG 1 in einer Druckrichtung r vorlaufend angeordnet, wobei die vorlaufend angeordnete Sensoranordnung 8 einer Regelungseinrichtung 26 zugeordnet ist, welche zur Regelung der Distanz d der Druckvorrichtung 6 vom Untergrund konfiguriert ist. Insbesondere wird die Distanz d durch die Regelungseinrichtung 26 über das Z-Stellglied 12 eingestellt.

Eine Steuereinheit 28 ist operativ mit den Stellgliedern 10, 12 und mit dem Druckkopf 9, in welchem die Druckvorrichtung 6 und die Sensoranordnung 8 aufgenommen sind, verbunden. Insbesondere wird ein Betrieb der Druckvorrichtung 6 und der Sensoranordnung 8 durch die Steuereinheit 28 gesteuert. Die Steuereinheit 28 umfasst einen digitalen Logikbaustein, beispielswiese einen Mikroprozessor, einen Mikrocontroller, einen FPGA (field programmable gate array) oder einen ASIC (application-specific integrated circuit), der für den Betrieb der Anordnung 2 konfiguriert ist.

Die Sensoranordnung 8 ist im Verhältnis zur Druckvorrichtung 6 derartig drehbar angeordnet, dass die Sensoranordnung 8 und die Druckvorrichtung 6 auf einer zu druckenden gekrümmten Bahn jeweils stets zentriert angeordnet sind. Insbesondere bleibt der Betrag des Abstands a unabhängig vom Drehwinkel α konstant. Ein weiteres Stellglied 30, welches beispielhaft im Druckkopf 9 angeordnet ist und beispielsweise einen Elektromotor umfasst, wird von der Steuereinheit 28 angesteuert, um den Drehwinkel α während des Extrusionsvorgangs dynamisch so zu justieren, dass die Druckvorrichtung 6 und die Sensoranordnung 8 auf der zu druckenden gekrümmten Bahn jeweils stets zentriert angeordnet sind. Dabei wird bei einer Druckvorrichtung 6 und einer Sensoranordnung 8 entweder der gesamte Druckkopf 9 oder die Sensoranordnung 8 um die Druckvorrichtung 6 gedreht.

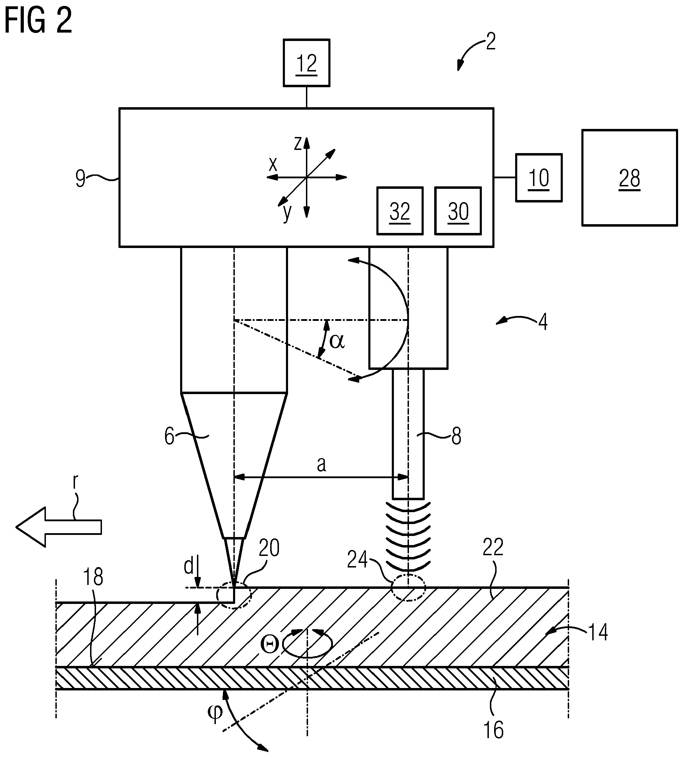

FIG 2 zeigt eine schematische Schnittdarstellung einer zweiten Ausgestaltung einer Anordnung 2 zur additiven Fertigung mit einer Druckanordnung 4, wobei die Sensoranordnung 8 in Druckrichtung r nachlaufend angeordnet ist. Die nachlaufend angeordnete Sensoranordnung 8 ist einer Vorrichtung zum Monitoring 32 zugeordnet, über welche beispielsweise Auftragsstärke und/oder eine Temperatur des Druckmaterials 22 ermittelt und mit einem Sollwert verglichen wird. Die weitere Ausführung der Anordnung 2 in FIG 2 entspricht der Ausführung in FIG 1.

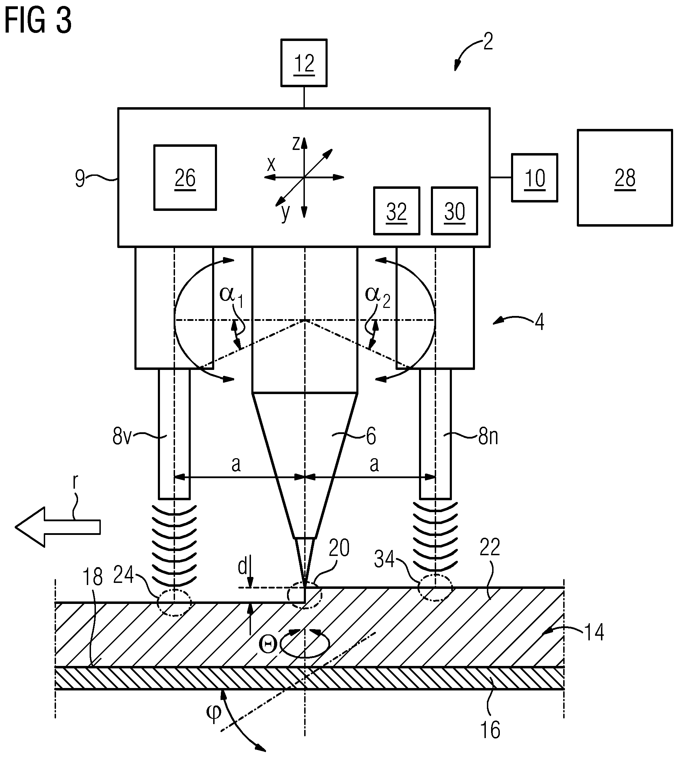

FIG 3 zeigt eine schematische Schnittdarstellung einer dritten Ausgestaltung einer Anordnung 2 zur additiven Fertigung mit einer Druckanordnung 4, wobei die Druckanordnung neben der Druckvorrichtung 6 eine in Druckrichtung r vorlaufend angeordnete Sensoranordnung 8v und eine in Druckrichtung r nachlaufend angeordnete Sensoranordnung 8n aufweist. Die vorlaufend angeordnete Sensoranordnung 8v ist, wie in FIG 1, konfiguriert, insbesondere gleichzeitig mit dem Auftragen des Druckmaterials 22 durch die Druckvorrichtung 6, in einem vom ersten Feld 20 verschiedenen zweiten Feld 24 eine physikalische Größe zu ermitteln und ist einer Regelungseinrichtung 26 zugeordnet, welche zur Regelung der Distanz d der Druckvorrichtung 6 vom Untergrund konfiguriert ist. Insbesondere wird die Distanz d durch die Regelungseinrichtung 26 über das Z-Stellglied 12 eingestellt. Die nachlaufend angeordnete Sensoranordnung 8n ist konfiguriert, insbesondere gleichzeitig mit dem Auftragen des Druckmaterials 22 durch die Druckvorrichtung 6, in einem vom ersten Feld 20 und vom zweiten Feld 24 verschiedenen dritten Feld 34 eine physikalische Größe zu ermitteln und ist, wie in FIG 2, einer Vorrichtung zum Monitoring 32 zugeordnet, über welche beispielsweise Auftragsstärke und/oder eine Temperatur des Druckmaterials 22 ermittelt und mit einem Sollwert verglichen wird.

Die vorlaufend angeordnete Sensoranordnung 8v und die nachlaufend angeordnete Sensoranordnung 8n sind im Verhältnis zur Druckvorrichtung 6 derartig drehbar angeordnet, dass die Sensoranordnungen 8v, 8n und die Druckvorrichtung 6 auf einer zu druckenden gekrümmten Bahn jeweils stets zentriert angeordnet sind. Hierbei sind die Sensoranordnungen 8v, 8n unabhängig voneinander drehbar angeordnet, sodass beispielsweise die vorlaufend angeordnete Sensoranordnung 8v um einen ersten Drehwinkel α1 und die nachlaufend angeordnete Sensoranordnung 8n um einen zweiten Drehwinkel α2 um die Druckvorrichtung 6 gedreht wird. Insbesondere bleibt der Betrag des Abstands a unabhängig von den Drehwinkeln α1, α2 konstant. Die weitere Ausführung der Anordnung 2 in FIG 3 entspricht der Ausführung in FIG 1.

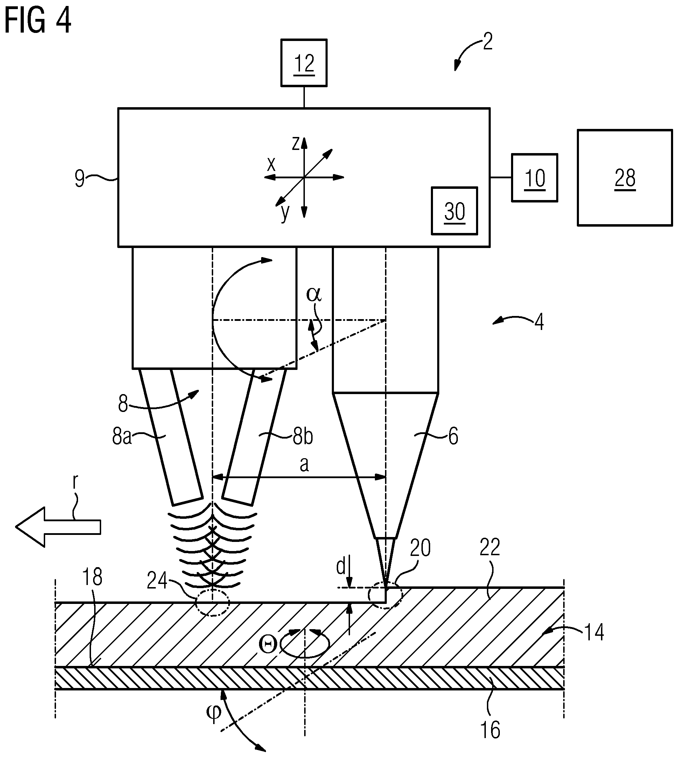

FIG 4 zeigt eine schematische Schnittdarstellung einer vierten Ausgestaltung einer Anordnung 2 zur additiven Fertigung mit einer Druckanordnung 4, wobei die Sensoranordnung 8, welche in Druckrichtung r vorlaufend angeordnet ist, einen ersten Sensor 8a und einen zweiten Sensor 8b aufweist. Mit Hilfe der Sensoren 8a, 8b wird in einem gemeinsamen zweiten Feld 24 zumindest eine physikalische Größe ermittelt. Beispielsweise ist der erste Sensor 8a als Abstandssensor und der zweite Sensor 8b als Temperatursensor ausgeführt. Alternativ sind die Sensoren 8a, 8b redundant ausgeführt. Die weitere Ausführung der Anordnung 2 in FIG 4 entspricht der Ausführung in FIG 1.

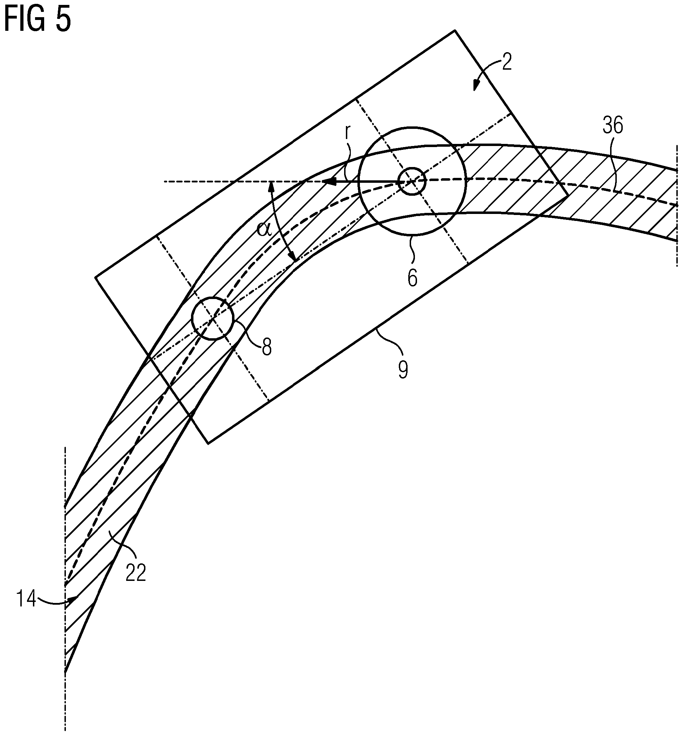

FIG 5 zeigt eine schematische Darstellung eines Verfahrens zum Drucken einer gekrümmten Bahn 36. Die Sensoranordnung 8 der Druckanordnung 4 ist in Druckrichtung r vorlaufend ausgeführt. Die Sensoranordnung 8 ist im Verhältnis zur Druckvorrichtung 6 derartig um einen Drehwinkel α drehbar ausgeführt, dass die Druckvorrichtung 6 und die Sensoranordnung 8 auf der zu druckenden gekrümmten Bahn 36 stets zentriert angeordnet sind.

Ein Bewegungsprogramm für die Druckvorrichtung 6 und die Sensoranordnung 8 wird beispielsweise in einem CAD/CAM System generiert. Spezielle CAM Funktionen können die Orientierung der Druckvorrichtung 6 und der Sensoranordnung 8 zueinander berechnen, die notwendig ist den Arbeitspunkt der Druckvorrichtung 6, das erstes Feld 20, auf der programmierten Position zu halten und so zu orientieren, dass auch die Sensoranordnung 8 stets auf der zu druckenden gekrümmten Bahn 36 an anderer Position, dem zweiten Feld 24, messen kann. Für die Fahrbewegung der Druckanordnung 4 werden so auch immer die Orientierungen berechnet, die jeweils die beiden Felder 20, 24 auf der Bahn halten. Insbesondere werden die einzelnen Achsen synchron so angesteuert, dass das erste Feld 20 der Druckvorrichtung 6 und das zweite Feld 24 der Sensoranordnung 8 auf der Bahn 36 liegen und dass eine gleichmäßige resultierende Bewegung der Druckanordnung 4, auch in Bezug auf die Orientierung der Druckvorrichtung 6 und der Sensoranordnung 8, entsteht. Auf diese Weise sind eine konstante programmierte Bahngeschwindigkeit oder bestimmte Geschwindigkeitsprofile realisierbar. Insbesondere werden Messwerte der Sensoranordnung 8, die Abstände oder auch kleinere Profile, beispielsweise von Schweißraupen, sein können, in Bezug zu den Bahnkoordinaten der gekrümmten Bahn 36 abgespeichert und ausgewertet. Die Messwerte sind beispielsweise für eine Prozessregelung nutzbar. Die weitere Ausführung der Anordnung 2 in FIG 5 entspricht der Ausführung in FIG 1.

Zusammenfassend betrifft die Erfindung eine Anordnung 2 zur additiven Fertigung eines dreidimensionalen Druckobjekts 36 mit einer translatorisch in drei Achsen X, Y, Z verfahrbaren Druckanordnung 4. Um eine verbesserte Kostenposition zu errichen, wird vorgeschlagen, dass die Druckanordnung 4 zumindest eine Druckvorrichtung 6 sowie zumindest eine von der Druckvorrichtung 6 beabstandete Sensoranordnung 8, 8v, 8n umfasst, wobei die zumindest eine Druckvorrichtung 6 konfiguriert ist, in einem ersten Feld 20 ein Druckmaterial 22 aufzutragen, wobei die zumindest eine Sensoranordnung 8, 8v, 8n konfiguriert ist, insbesondere gleichzeitigen, in einem vom ersten Feld 22 verschiedenen zweiten Feld 24 zumindest eine physikalische Größe zu ermitteln.

## Patentansprüche

1. Anordnung (2) zur additiven Fertigung eines dreidimensionalen Druckobjekts (36) mit einer translatorisch in drei Achsen (X, Y, Z) verfahrbaren Druckanordnung (4),
wobei die Druckanordnung (4) zumindest eine Druckvorrichtung (6) sowie zumindest eine von der Druckvorrichtung (6) beabstandete Sensoranordnung (8, 8v, 8n) umfasst,
wobei die zumindest eine Druckvorrichtung (6) konfiguriert ist, in einem ersten Feld (20) ein Druckmaterial (22) aufzutragen,
wobei die zumindest eine Sensoranordnung (8, 8v, 8n) konfiguriert ist, insbesondere gleichzeitigen, in einem vom ersten Feld (22) verschiedenen zweiten Feld (24) zumindest eine physikalische Größe zu ermitteln.

2. Anordnung (2) nach Anspruch 1,
wobei zumindest eine Sensoranordnung (8, 8v, 8n) einen Abstandssensor zur Ermittlung einer Distanz (d) zur Anordnung (2) umfasst.

3. Anordnung (2) nach einem der Ansprüche 1 oder 2,
wobei zumindest eine Sensoranordnung (8, 8v) in einer Druckrichtung (r) vorlaufend angeordnet ist.

4. Anordnung (2) nach Anspruch 3,
wobei die vorlaufend angeordnete Sensoranordnung (8, 8v) einer Regelungseinrichtung (26) zugeordnet ist.

5. Anordnung (2) nach einem der vorherigen Ansprüche,
wobei zumindest eine Sensoranordnung (8, 8n) in einer Druckrichtung (r) nachlaufend angeordnet ist.

6. Anordnung (2) nach Anspruch 5,
wobei die nachlaufend angeordnete Sensoranordnung (8, 8n) einer Vorrichtung zum Monitoring (32) zugeordnet ist.

7. Anordnung (2) nach einem der vorherigen Ansprüche,
wobei zumindest eine Sensoranordnung (8, 8v, 8n) im Verhältnis zu zumindest einer Druckvorrichtung (6) derartig drehbar angeordnet ist, dass die zumindest eine Druckvorrichtung (6) und die zumindest eine Sensoranordnung (8, 8v, 8n) auf einer zu druckenden gekrümmten Bahn (36) jeweils zentriert angeordnet sind.

8. Anordnung (2) nach einem der vorherigen Ansprüche, aufweisend ein Stützelement (16), auf welchem ein zu druckendes dreidimensionales Druckobjekt (14) anordenbar ist,
wobei das Stützelement (16) zumindest rotatorisch um einen Azimutwinkel (θ) und/oder einen Elevationswinkel (ϕ) bewegbar ausgeführt ist.

9. Anordnung (2) nach einem der vorherigen Ansprüche,
wobei zumindest eine Sensoranordnung (8, 8v, 8n) zwei verschiedenartige Sensoren (8a, 8b) aufweist,
wobei die zwei verschiedenartigen Sensoren (8a, 8b) konfiguriert sind, insbesondere gleichzeitig, im zweiten Feld (24) jeweils eine, insbesondere unterschiedliche, physikalische Größe zu ermitteln.

10. Verfahren zur additiven Fertigung eines dreidimensionalen Druckobjekts (14) mit einer translatorisch in drei Achsen (X, Y, Z) verfahrbaren Druckanordnung (4),
wobei die Druckanordnung (4) zumindest eine Druckvorrichtung (6) sowie zumindest eine von der Druckvorrichtung (6) beabstandete Sensoranordnung (8, 8v, 8n) umfasst,
wobei mit der zumindest einen Druckvorrichtung (6) in einem ersten Feld (20) ein Druckmaterial (22) aufgetragen wird, wobei mit der zumindest einen Sensoranordnung (8, 8v, 8n), insbesondere gleichzeitig, in einem vom ersten Feld (20) verschiedenen zweiten Feld (24) zumindest eine physikalische Größe ermittelt wird.

11. Verfahren nach Anspruch 10,
wobei mit zumindest einer Sensoranordnung (8, 8v, 8n) eine Distanz (d) zur Anordnung (2) ermittelt wird.

12. Verfahren nach einem der Ansprüche 10 oder 11,
wobei zumindest eine Sensoranordnung (8, 8v) in einer Druckrichtung (r) vorlaufend angeordnet ist,
wobei mit der vorlaufend angeordneten Sensoranordnung (8, 8v) ein Regelungsverfahren durchgeführt wird.

13. Verfahren nach einem der Ansprüche 10 bis 12,
wobei zumindest eine Sensoranordnung (8, 8n) in einer Druckrichtung (r) nachlaufend angeordnet ist,
wobei mit der nachlaufend angeordneten Sensoranordnung (8, 8n) ein Monitoringverfahren durchgeführt wird.

14. Verfahren nach einem der Ansprüche 10 bis 13,
wobei zumindest eine Sensoranordnung (8, 8v, 8n) im Verhältnis zu zumindest einer Druckvorrichtung (6) derartig gedreht wird, dass die zumindest eine Druckvorrichtung (6) und die zumindest eine Sensoranordnung (8, 8v, 8n) auf einer zu druckenden gekrümmten Bahn (36) jeweils zentriert angeordnet sind.

15. Verfahren nach einem der Ansprüche 10 bis 14,
wobei das zu druckende dreidimensionale Druckobjekt (14) auf einem Stützelement (16) angeordnet wird,
wobei das Stützelement (16) zumindest rotatorisch um einen Azimutwinkel θ und einen Elevationswinkel ϕ bewegt wird.

16. Steuereinheit (28) mit Mitteln zur Durchführung eines Verfahrens nach einem der Ansprüche 10 bis 15.
